# EUROPEAN PATENT APPLICATION

(11) **EP 2 165 994 A1**
(43) Date of publication of application: **24.03.2010**
(21) Application number: 08775434.7
(22) Date of filing: 04.06.2008
(51) Int. Cl.: C05F 11/08, A01N 63/00

(54) **METHOD FOR OBTAINING A SUBSTRATE OF ENRICHED TURF, CORRESPONDING SUBSTRATE AND APPLICATION AS A CULTIVATION BASE**

(30) Priority: 04.06.2007 ES 200701533
(71) Applicant: Santamaria Pau, José Manuel, 12400 Segorbe (ES)
(72) Inventor: Santamaria Pau, José Manuel, 12400 Segorbe (ES)
(74) Representative: Sanz-Bermell Martinez, Alejandro
(86) International application number: PCT/ES2008/000406
(87) International publication number: WO 2008/148915

(57) **Abstract**

This method consists in the process wherein a base material such as turf, cocopeat, earthworm humus, manure, pine bark, sawdust, other organic residues, or mixtures thereof, is mixed with a culture of microorganisms selected for the function to be met, optionally including a nutrient medium for said microorganisms, and optionally packaging thereof in plastic bags. The invention also concerns the product resulting from said process, and the use of the product obtaind thereby as a cultivation base.

## Description

The scope of this invention is a peat substrate enriched by adding microorganisms, a method to its obtaining and this substrate use on cultivation trays.

The lands where different vegetables' species grow have a number of natural resources which from one side provide plants with nutrients and from another side they are a defence for roots and stems in case of possible aggression from several organisms.

From pesticide use as a plague proliferation treatment, the biosystem placed around the plant and especially in the land around the root is reduced or even removed completely, so it results in a plant's special vulnerability. Once the pesticide action intensity gets reduced, a number of organisms are able to access the plant with no protection from the natural damaged organisms and resulting even in the plant's death.

From the most ancient times until last days, draught animals and horses were used to plough. Draught animals produced manure both in the land (so it feed and helped the plants) and in the stables (which later would be used as fertilizer in the land) getting always the same effects previously stated.

The manure consists of bacterium and fungus which were distributed with the same compost. These microorganisms had several tasks such as assimilating the nitrogen from air in the roots, dissolving the nutrients which were in insoluble form in the soil and therefore making them available for the plants. They also balanced the bacterium population avoiding illness and plagues. Basically, there were neither insecticides nor plagues to treat with.

Nowadays, as these animals are not longer used, the fertilization is carried out by supplying selective artificial products: the fertilizers.

These fertilizers haven't the same efficient microorganisms and therefore they don't provide the soil with the same ones. It results in pathogen microorganisms' proliferation and then it is necessary to use products to treat them: pesticides and plague treatment products.

Besides, plagues are fought by using insecticides which kill everything which is biologically alive, including spores, fungus and bacterium which are beneficial for the agriculture purposes.

Therefore, plague fighting products alter land's balance as they also eliminate fungus and bacterium which are useful to synthesize and develop nutrients and to avoid that plants may be attacked by other micro beings damaging their development.

### Background.

As stated, the traditional agriculture used animal's excrements to enrich the land. It was necessary to use draught animals to plough and the care they received in the stables which make it possible to gather manure which was spread even when land was lied in fallow or when it was not cultivated.

As it was necessarily some kind of balance between the number of animals and the cultivable land extension, animal manure production allow a balance in the land with enough bacterium and fungus supply with the nutrients the manure container.

The industrial evolution took the use of tractors under the slogan that when they don't work, they don't eat. Nevertheless, the lack of animals means that the before manure gathering is not longer produced. Therefore, it was necessary to carry out other land's enrichement

To alleviate the shortages produced by the lack of nutrients contribution and by the natural protection elimination, it was develop synthetic manures by one side and insecticides and pesticides by other side.

One of the advantages the chemical fertilizers present is the fact that they can be applied in a discriminated manner, that means, according to plant's needs to reinforce the land with the necessary nutrients to develop the farming we deal with.

Nevertheless, the lack of balance in the plant's biosystem or in the cultivated area allows plague proliferation. It is due because the fungus and bacterium which were provided previously within the draught animals' manure are not included in the chemical fertilizer and therefore they do not provide the environment with the necessary protection.

Besides, plagues are fought with insecticides and pesticides which kill not only insects and damaging spores, but also they do destroy the bacterium and fungus that protect the plant in front of damaging biological beings attack.

To fight against it, it has been developed several plant's species which are resistant to plagues in a natural way but losing other characteristics such as organoleptic or genetic ones to guarantee the vegetable, fruits or green vegetables' production even with land does not meet the necessary conditions for these purposes.

The plantations cultivated in a nursery have their growth on a natural or artificial peat and they may not be submitted to different aggressive actions from the organisms existing in a natural environment. Nevertheless, when the plantation is transplanted to the land, as it hasn't the peat which the farming produces with the adequate protection, this peat starts being attacked by external agents (the organisms existing in the land), causing the plant's damage or destruction.

Therefore, it would be desirable to obtain a peat or substrate which contains the necessary protection and nutrients for the plant and, at the same time, which can be used in cultivation trays for the plantation.

### Explication of the Invention

So the scope of this invention is a method to produce an enriched substrate which allows the necessary microorganism's addition, the corresponding obtained substrate and its application to cultivation trays before it is transplanted.

The starting point is a substrate. The invention consists of a selection and mixture of microorganisms (bacterium and fungus) used in agriculture both in powder and liquid with substrates with any composition, although preferably it is aimed at the use of peat and cocopeat which substitutes the peat and it's obtained from the external side of the coconut, earthworm humus, their mixture between each other or with other materials such as pines' bark, sawdust or any other. It can also be added other ingredients which are not substrates but which feed the microorganisms and they accelerate their growth such as sugar, salt, jagery, (this last product is also known in South America as "pamela" and it is obtained from the sugarcane) or any similar ingredient which feeds the microorganisms.

The method to get this substrate, according a first realization, involves the following steps:
- Mixing the microorganisms in water; and
- Mixing the water with microorganisms with the substrates; and
- Fulfilling the plastic sacks with the substrates provided with microorganisms.

Mixing the above products results in an increase by proliferation that takes place in the cocopeat or another as being the microorganisms' mixture in a plastic sack (used during these products' transport or storage) it is a fantastic way to cultivate them.

During the preliminary trials, it was surprising that the proliferation was so huge and besides the external aspect did not change in time. That's it, no white fungus or another colour one were produced, what was negatively considered and rejected by farmers as they believe they are damaging microorganisms, although they especially weren't.

The two effects are as follows: firstly, the external aspect didn't change and secondly that the microorganisms' counting was the same in the initial concentration than after being introduced in the cocopeat sacks. The initial concentration was 1x10⁹ and after a month the microorganisms counting gave the same result - 1x10⁷ to 1x10⁹ per ml or gram - which is a rate considered sufficient for its effective application. By this way, the intermediate goods price is greatly reduced.

According the second realization, the microorganisms which normally are supplied in powder are dry mixed directly with the substrate not mixing these microorganisms with water. Later, the mixture is compacted to optimise weight/volume realization for transport purposes and finally it can be hydrated back to be used and/or to pack it to be distributed.

The microorganisms are bacterium and fungus which have a nutrition function, others have a protective function to prevent plagues avoiding the presence of damaging microorganisms and others have also a protective function as the attack directly to the microorganisms which cause plagues. Therefore, it is a complete intermediate good system which can be implemented in the land and in 3 years it allows to reduce gradually the chemical fertilizers and pesticides since it is possible not to use them. It can be necessary to add natural intermediate goods.

The way to carry out the first realization depends on the machinery available, but, for instance, let's suppose that a tank similar to the one is used in the concrete truck is available. Once the final product quantity that the tank can afford is calculated, the components are introduced (in the necessary calculated quantity) which can be peat, cocopeat, earthworm humus, manure, pine bark, sawdust and organic remains.

It is also calculated the necessary water to be add and the microorganisms (bacterium and fungus) are introduced in it as well as it is also possible (optional) to introduce sugar, salt, jagery, it means, nutrients for bacterium and fungus.

The water with the above mixture is added to the tank and then the product is finished to be packed in plastic sacks, where the micro organism population will increase until the growth limit..

The way to carry out the second realization depends also on the machinery available but it can be done by weighing the substrate necessary quantity according to the resulting bale size after being pressed (5-kilo bale, 650-gram brick or the tables also known farming sacks with different sizes), adding the microorganisms quantity in liquid form as it is suggested or in powder (in liquid form it is obtained better results concerning micro organism concentration and as the quantity is small the later pressed is normally 5 to 1). Later, it is mixed, it can be done manually and being introduced in a hydraulic press to be pressed. The resulting product is pilled up in pallets or it is just protected with a shrinkwrapped plastic or just putted in an individual box. In all the pressed product packages the microorganisms stay and they increase as although it is a dry product, there is 15% moisture at least, which is enough for their development.

Later, at destination, water is added to expand the product or to recuperate the original volume and it's applied to the land or sacked. The goal of the second realization is just to reduce the product's transport cost as well as to reduce the room it takes in gardening shops.

The previously stated method can be carried out in a more automatic way, depending on the workforce cost in the country it's done.

By this way it is obtained a substrate richer than the old compost as well as more balanced with the chosen bacterium and fungus according to the application this substrate is going to be used.

For instance, if it is necessary a substrate that improves the plant's nutrition, all the microorganisms related with nutrition will be added (as, for example, *Azospirillum* (it fixes the nitrogen), *Bacillus megaterium* (which makes the phosphorus soluble) and *Frateuria aurentia* (which makes the potassium soluble) and which improves the assimilation of the 15 nutrients the plants need.

If we want to strengthen the plant against illness, it will be add the corresponding microorganisms (for instance: *Pseudomonas fluorescens* and *Bacillus subtillis*).

If we want to fight against the existing plagues, it will be add the corresponding organisms (for instance: *Bacillus thuringiensis, Beauvaria bassiana, Verticillium lacanii* and *Metarhizium anisopliae*).

If we want to fight against the nematodes, the corresponding microorganisms will be added (for instance: *Trichoderma virile* and *Paecilomyces lilacinus*) as well as neem products (neem oil, cake or pellets) to strengthen the above microorganisms.

If we want to fight against a specific disease and there is a corresponding micro organism, as for example the mildew (the antagonist micro organism is the *Ampelomyces quisqualis*) it will be added to the substrate, packed in the plastic sack where it will grow in a month and then it will be ready to be applied to the land and then an irrigation will be carried out (if it is drip irrigation, it will be applied in the drip area).

If we want to get a general substrate, all the microorganisms will be added (nutrients, disease controllers, pesticides and nematicides) as well as a nutrient such as earthworm humus or manure.

Definitely, it is about getting a huge quantity of enriched substrate with a small quantity of microorganisms thanks to the propagation that takes place in the package until it is used by the farmer.

The obtained substrate comes from the previously stated microorganisms' addition. It means, a substrate enriched by a group of microorganisms which carry out at least one of the following functions:
- Improving the plant's nutrition (for instance: *Azospirillum*, *Bacilus megaterium* and *Frateuria aurentia);*
- Strengthening the plant against diseases (for instance: *Pseudomonas fluorescens y Bacillus subtillis*);
- Protection against existing plagues (for instance: *Bacillus thuringiensis*, *Beauvaria bassiana*, *Verticillium lacanii* or *Metarhizium anisopliae*);
- Protection against nematodes (for instance: *Trichoderma viride* and *Paecilomyces lilacinus,* as well as products which contain neem [neem oil, cake or pellets] to strengthen);
- Protection against diseases (for instance: *Ampelomyces quisqualis* as antagonist micro organism against mildew)

A general substrate will involve a group with all these microorganisms (nutrients, disease controllers, pesticides, nematicides) as well as any other nutrient such as earthworm humus or manure.

It is also describes the substrate use as base for plant's farming. Nonetheless, it is understood that it is understood as a environment for plants to be transplanted. A specific utilization is the use of the substrate object of this invention as farming base in cultivation trays or any other cultivation stand as once it is transplanted to the land, the plant grown on this substrate keeps on being protected by all the described microorganisms, which proliferate on the land as well, improving its fertility as plant's defence.

It remains to clarify that the references to the peat involve also its natural vegetables ones or artificial ones used with the same described goal.

## Claims

1. **Method to obtain a enriched peat substrate, characterized in** involving the following stages:
• Selecting a group of microorganisms,
• Mixing the group of microorganisms in a basic substrate.

2. Method, according to the claim 1, **characterized in that** it includes prior to the microorganisms mixture with the substrate a mixture of the microorganisms with water to be later mixed this mixture with the above substrate.

3. Method, according to the claim 1, **characterized in that** the microorganisms are in concentrated liquid form or in powder and its mixture with the substrate is carried out with the dry substrate.

4. Method, according to the claim 3, **characterized in that** the mixed substrate is pressed to optimize the weight/volume relationship.

5. Method, according to any of the claims 3 and 4, **characterized in that** it involves a substrate's re-hydration before being used or packed.

6. Method, according to any of the claims 1 to 5, **characterized in** the addition of nutrients to the mixture, such as sugar, j agery or similar.

7. Method, according to any of the claims 1 to 6, **characterized in that** it involves the mixture packaging in plastic sacks too.

8. Method, according to any of the claims 1 to 5, **characterized in that** the added microorganisms are bacterium and fungus with nutrition, protection or plague fighting function.

9. Method, according to any of the above claims, **characterized in that** the substrates can at least be one of the following materials: peat, cocopeat, earthworm humus, manure, pine bark, sawdust or organic remains, or mixture between each other.

10. Method, according to the claims 1 to 5 and 8, **characterised in that** the microorganisms mixture is carried out according to the goal and the environment it is assigned to.

11. Method, according to claim 10, **characterized in that** the supplied microorganisms improve the nutrition, such as *Azospirillum*, *Bacilus megaterium* and/or *Frateuria aurentia.*

12. Method, according to claim 10, **characterized in that** the supplied microorganisms stregthen the plant against diseases, such as *Pseudomonas fluorescens* and/or *Bacillus subtillis*).

13. Method, according to the claim 10, **characterized in \that** the supplied microorganisms are to fight against the existing plagues, such as *Bacillus thuringiensis*, *Beauvaria bassiana*, *Verticillium lacanii* and/or *Metarhizium anisopliae*).

14. Method, according the claim 10, **characterized in that** the supplied microorganisms are to fight against the nematodes, such as *Trichoderma viride* and *Paecilomyces lilacinus*, as well as products containing neem (neem oil, cake or pellets) which strengthen the previous ones.

15. Method, according to the claim 10, **characterized in that** supplied microorganisms are to fight against diseases such as mildew, being these microorganisms such as *Ampelomyces quisqualis.*

16. Enriched peat substrate which involves a basis composed at least by one of the following materials:
• Peat
• Cocopeat
• Earthworm humus
• their mixtures between each other
• mixtures with other materials such as pine bark, sawdust and equivalent materials;
**characterized in that** it involves also an added microorganisms population, being these microorganisms bacterium and fungus used in farming

17. Enriched peat substrate, according to the claim 16, **characterized in that** it includes a food for those microorganisms being this food sugar, salt and/or jagery.

18. Enriched peat substrate, according to the claim 16, **characterized in that** the microorganisms are bacterium and fungus with a nutrition, protection or fight against plagues function.

19. Enriched peat substrate, according to the claim 16, **characterized in that** the added microorganisms are chosen according the goal and environment it is going to be applied.

20. Enriched peat substrate, according to the claim 19, **characterized in that** the added microorganisms improve the nutrition, such as *Azospirillum*, *Bacilus megaterium* and/or *Frateuria aurentia.*

21. Enriched peat substrate, according to the claim 16, **characterized in that** the added microorganisms strengthen the plant against diseases, such as *Pseudomonas fluorescens* and/or *Bacillus subtillis*).

22. Enriched peat substrate, according to the claim 16, **characterized in that** the supplied microorganisms fight against the existing plagues, such as *Bacillus thuringiensis*, *Beauvaria bassiana*, *Verticillium lacanii* and/or *Metarhizium anisopliae*).

23. Enriched peat substrate, according to the claim 16, **characterized in that** the supplied microorganisms fight against the nematodes, such as *Trichoderma viride* and *Paecilomyces lilacinus*, as well as the products containing neem (neem oi, cake or pellets) which strengthen the above stated.

24. Enriched peat substrate, according to the claim 16, **characterized in that** the supplied microorganisms fight against diseases such as the mildew, being those microorganisms such as *Ampelomyces quisqualis.*

25. Enriched peat substrate, according to the claim 16, **characterized in that** it is set in a plastic package where the increase and maintenance of microorganisms' population is improved.

26. Claim's 16 enriched peat substrate application, **characterized in that** it is used as basis for plant's cultivation.
